# EUROPÄISCHE PATENTSCHRIFT

(11) **EP 2 145 782 B1**
(45) Veröffentlichungstag und Bekanntmachung des Hinweises auf die Patenterteilung: **08.08.2012**
(21) Anmeldenummer: 09009244.6
(22) Anmeldetag: 15.07.2009
(51) Int. Cl.: B60H 1/22, F24H 3/04, F24H 9/18, H05B 3/50

(54) **Fahrzeugheizung**
Vehicle heater
Chauffage de véhicule

(30) Priorität: 15.07.2008 DE 102008033140
(43) Veröffentlichungstag der Anmeldung: 20.01.2010
(73) Patentinhaber: BorgWarner BERU Systems GmbH, 71636 Ludwigsburg (DE)
(72) Erfinder: Ernst, Norbert, 76831 Billigheim (DE); Hetzler, Jürgen, 76877 Offenbach (DE)
(74) Vertreter: Twelmeier Mommer & Partner

(56) Entgegenhaltungen:
- EP-A1- 1 432 287
- EP-A1- 1 780 061
- WO-A1-2006/059960
- WO-A1-2007/071335
- DE-A1- 19 848 169

## Beschreibung

Die Erfindung betrifft eine Fahrzeugheizung mit den im Oberbegriff des Anspruches 1 angegebenen Merkmalen. Eine Fahrzeugheizung mit den im Oberbegriff des Anspruchs 1 angegebenen Merkmalen ist aus der WO 2007/071335 A1 bekannt.

Eine Fahrzeugheizung mit mehreren in Strömungsrichtung hintereinander angeordneten Heizeinrichtungen und Wärmeübertragern ist beispielsweise aus der EP 1 780 061 A1 bekannt. Bei dieser Heizeinrichtung sind PTC-Elemente zwischen parallel angeordneten Kontaktblechen eingeklebt, die mit Wellrippen als Wärmeübertrager verklebt sind. Die so gebildeten Baugruppen werden jeweils mit einem Halterahmen versehen und so zu einer Heizeinheit zusammengefasst. Mehrere solche Heizeinheiten werden in Strömungsrichtung hintereinander angeordnet mit einem weiteren Rahmen und einem Aufsatz zu einer Fahrzeugheizung zusammengefasst.

Aus DE 198 46 169 A1 ist eine weitere Fahrzeugheizung mit mehreren als Stäbe ausgebildeten Heizeinheiten bekannt. Die einzelnen Heizstäbe sind durch aufgeschobene Wärmeübertrager in Form von Blechlammelen zu einer Baugruppe verbunden. Auf die Enden der Heizstäbe wird zur Montage in einem Fahrzeug ebenfalls jeweils ein Flansch aufgesteckt.

Aufgabe der vorliegenden Erfindung ist es, einen Weg aufzuzeigen, wie sich die Fertigung einer Fahrzeugheizung der eingangs genannten Art vereinfachen lässt.

Diese Aufgabe wird durch eine Fahrzeugheizung mit den im Anspruch 1 angegebenen Merkmalen gelöst. Vorteilhafte Weiterbildungen der Erfindung sind Gegenstand der Unteransprüche.

Bei einer erfindungsgemäßen Fahrzeugheizung haben die Wärmeübertrager Heizeinrichtungsaufnahmen, in denen die Heizeinrichtungen angeordnet sind. Die Heizeinrichtungsaufnahmen können beispielsweise als offene Kanäle ausgebildet sein, in welche die Heizeinrichtungen bzw. deren Komponenten eingelegt werden. Derartige Kanäle können beispielsweise einen U-förmigen Querschnitt haben. Bevorzugt haben die Heizeinrichtungsaufnahmen jedoch Öffnungen, in denen die Heizeinrichtungen stecken.

Mittels an den Wärmeübertragern vorgesehenen Heizeinrichtungsaufnahmen lässt sich eine einfache und kostengünstige Fertigung realisieren. Das Befestigen der Heizeinrichtungen an dem Wärmeübertrager kann auf diese Weise nämlich mit geringem Aufwand vorgenommen werden. Beispielsweise können die Heizeinrichtungen in den Heizeinrichtungsaufnahmen kraftschlüssig und/oder formschlüssig gehalten werden. Insbesondere können die Wärmeübertrager vorteilhaft genutzt werden, die einzelnen Elemente der Heizeinrichtungen, nämlich deren Kontaktplatten mit dazwischen angeordneten Heizelementen, zusammen zu halten. Dadurch lässt sich der Aufbau der Heizeinrichtungen vereinfachen, insbesondere kann auf ein aufwendiges Verlöten oder Verkleben der Kontaktplatten der Heizeinrichtungen mit den Heizelementen verzichtet werden. Zudem lassen sich die Heizeinrichtungen in den Heizeinrichtungsaufnahmen der Wärmeübertrager klemmend fixieren, so dass auch diesbezüglich eine Vereinfachung der Fertigung erzielt werden kann.

Die Wärmeübertrager und die an ihnen befestigten Heizeinrichtungen sind vorteilhaft von einer Halterung zu einer Baugruppe verbunden, so dass sich eine efindungsgemäße Fahrzeugheizung gut handhaben lässt.

Bevorzugt sind die Heizeinrichtungen von benachbarten Wärmeübertragern in Bezug auf die Strömungsrichtung versetzt angeordnet. Auf diese Weise lässt sich eine besonders effiziente Wärmeabgabe an einen die Wärmeübertrager durchströmenden Luftstrom erwirken. Bei Verwendung von gleich ausgebildeten Wärmeübertragern lässt sich eine versetzte Anordnung der Heizeinrichtungen dadurch erreichen, dass benachbarte Wärmeübertrager in Bezug auf die Strömungsrichtung unterschiedlich angeordnet sind. Beispielsweise können benachbarte Wärmeübertrager in Bezug auf die Strömungsrichtung seitlich versetzt angeordnet sein. Eine weitere Möglichkeit für eine versetzte Anordnung der Heizeinrichtungen besteht darin, benachbarte Wärmeübertrager in Bezug auf die Strömungsrichtung mit umgedrehter Orientierung anzuordnen; also so dass bei einem Wärmeübertrager seine Vorderseite angeströmt wird, während ein in Strömungsrichtung dahinter angeordneter Wärmeübertrager dem Luftstrom mit seiner Rückseite zugewandt ist. Eine weitere Möglichkeit besteht darin, bei einem unsymmetrischen Wärmeübetrager die Anschlußseiten zu vertauschen, also wenigstens einen der Wärmeübertrager auf dem Kopf stehend einzubauen. Bevorzugt haben die zu einer Baugruppe zusammengefassten Wärmeübetrager gleich lange Stirnseiten, auf denen die Halterung sitzt.

Bevorzugt weisen die Wärmeübertrager Röhren auf, in deren Öffnungen die Heizeinrichtungen stecken. Auf diese Weise lässt sich eine besonders gute Wärmeankopplung der Wärmeübertrager an die Heizeinrichtungen bewirken, insbesondere indem die Röhren nach dem Einbringen der Heizeinrichtungen verpresst werden.

Eine vorteilhafte Weiterbildung der Erfindung, sieht vor, dass die Wärmeübertrager Strangpressprofile sind, die Durchbrüche aufweisen, die von einem Luftstrom quer zur Strangpressrichtung durchströmbar sind. Geeignete Durchbrüche lassen sich in einem Strangpressprofil beispielsweise durch einen Stanzvorgang mit geringem Aufwand herstellen. Die Verwendung von Strangpressprofilen als Wärmeübertrager ermöglicht eine kostengünstige Fertigung, da ein mühsames Zusammenbauen des Wärmeübertragers aus einer größeren Anzahl von Einzelteilen vermieden werden kann. Im Gegensatz zu herkömmlichen Wärmetauschern, die aus Blechlamellen aufgebaut sind, lässt sich deshalb eine wesentliche Vereinfachung erzielen. Zudem lassen sich Strangpressprofile ohne zusätzlichen Aufwand mit in Strangpressrichtung verlaufenden Röhren herstellen, in deren Öffnungen die Heizeinrichtungen gesteckt werden können.

Die als Wärmeübertrager verwendeten Strangpressprofile lassen sich durch Ablängen eines (langen) Strangpressprofils erhalten, so dass die einzelnen Wärmetauscher gleich ausgebildet sind.

Die bevorzugt als Wärmeübertrager verwendeten Strangpressprofile haben bevorzugt eine Basisplatte, in der die durchströmbaren Durchbrüche sind. Von einer solchen Basisplatte können auf einer oder auf beiden Seiten Wärmeabgaberippen ausgehen. Bevorzugt hat das Strangpressprofil nur eine einzige Platte. Es können jedoch auch Strangpressprofile mit zwei, insbesondere parallel angeordneten, Platten verwendet werden, die durch zwischen ihnen angeordnete Wärmeabgaberippen oder Zwischenwände verbunden sind.

Jeder Wärmeübertrager einer erfindungsgemäßen Fahrzeugheizung hat mehrere Heizeinrichtungsaufnahmen. Die Wärmeübertrager einer erfindungsgemäßen Fahrzeugheizung sind in Reihen nebeneinander angeordnet und mehrere derartige Reihen in Strömungsrichtung hintereinander angeordnet.

Mehrere Kontaktschienen erstrecken sich nebeneinander quer zur Strömungsrichtung , wobei die beiden Kontaktplatten der Heizeinrichtungen jeweils an eine von zwei benachbarten Kontaktschienen angeschlossen sind. Diese Kontaktschienen können in Strömungsrichtung alternierend an den Plus- bzw. den Minuspol einer Spannungsquelle angeschlossen werden, so dass sich eine einfache und übersichtliche Schaltungsanordnung ergibt.

Eine weitere vorteilhafte Weiterbildung der Erfindung sieht vor, dass beide Kontaktplatten der Heizeinrichtungen elektrisch von den Wärmeübertragern isoliert sind. Auf diese Weise lässt sich eine Erhöhung der Sicherheit bewirken, die insbesondere für höhere Versorgungsspannungen von beispielsweise 400 Volt vorteilhaft ist. Indem nämlich beide Kontaktplatten elektrisch gegenüber den Wärmeübertragern isoliert sind, können die Wärmeübertrager auf Masse gelegt werden, so dass im Falle eines Defekts verhindert ist, dass die Wärmeübertrager auf Potential liegen.

Eine weitere vorteilhafte Weiterbildung der Erfindung sieht vor, dass die Kontaktplatten der Heizeinrichtungen jeweils einen Positionierrahmen tragen, der mindestens eine Aufnahme für ein Heizelement bildet. Auf diese Weise lässt sich das Zusammensetzen der Heizeinrichtungen vereinfachen, da die Heizelemente, bevorzugt quaderförmige PTC-Elemente, einfach in die dafür vorgesehenen Aufnahmen gelegt und anschließend mit einer zweiten Kontaktplatte, die ebenfalls einen bevorzugt gleich ausgebildeten Positionierrahmen trägt, bedeckt werden. Dadurch lässt sich die Anzahl unterschiedlicher Teile zur Herstellung der Fahrzeugheizung reduzieren, so dass Kosten eingespart werden können.

Um eine Vormontage der Positionierrahmen mit den Kontaktplatten zu ermöglichen, ist bevorzugt, dass die Positionierrahmen um Kanten der Kontaktplatten herum greifen, so dass die Kontaktplatten sowohl auf einer den Heizelementen zugewandten Vorderseite als auch auf einer Rückseite von dem Positionierrahmen gehalten werden. Geeignete Positionierrahmen lassen sich aus Kunststoff oder Polymerkeramik herstellen und können auf die Kontaktplatten aufgerastet, aufgeschoben oder um die Kontaktplatten gespritzt werden.

Vorteilhaft können PTC-Elemente, zwei Positionierrahmen und zwei Kontaktplatten zu einer Einheit vormontiert werden.

Bevorzugt lassen die Positionierrahmen eine von den Heizelementen abgewandte Rückseite der Kontaktplatten frei. Diese Rückseite der Kontaktplatten wird bevorzugt mit einer elektrisch isolierenden Auflage bedeckt, beispielsweise einem Streifen aus Kaptonfolie oder einer elektrisch isolierenden Keramik. Um eine besonderes gute Isolation zu erzielen, können auch mehrere Streifen aus gleichem oder unterschiedlichem Material aufeinander gelegt werden.

Zwar kann eine elektrische Isolierung der Kontaktplatten auch durch das Material eines die Rückseite bedeckenden Positionierrahmens, beispielsweise Polyamid, erreicht werden. Spritzgießfähige Materialien haben jedoch in der Regel den Nachteil, stets auch eine erhebliche Wärmeisolierung zu bewirken. Indem die Kontaktplatten durch eine separate Auflage elektrisch isoliert werden, lässt sich die elektrische Isolation mit einer vorteilhaft höheren Wärmeleitfähigkeit und somit besseren Wärmeankopplung der Heizeinrichtung an den Wärmeübertrager kombinieren.

Bevorzugt sind die PTC-Elemente von dem Positionierrahmen kraft- oder formschlüssig gehalten. Beispielsweise können die PTC-Elemente in den Aufnahmen der Positionierrahmen geklemmt sein. Bevorzugt haben die Positionierrahmen hierfür Klemmnasen.

Bevorzugt umschließen die Positionierrahmen die Heizelemente fluiddicht. Insbesondere wenn die Kontaktplatten und die Heizelemente nicht in Rohren angeordnet sind oder die Rohre nicht fluiddicht sind, können die Positionierrahmen vorteilhaft Kontakt zwischen dem zu erwärmenden Fluid und den Heizelementen verhindern. Beispielsweise können die beiden Positionierrahmen einer Heizvorrichtung dichtend aneinander anliegen. Möglich ist es auch, dass zwischen den Isolierrahmen eine Dichtung angeordnet ist.

Weitere Einzelheiten und Vorteile der Erfindung werden an einem Ausführungsbeispiel unter Bezugnahme auf die beigefügten Zeichnungen erläutert. Es zeigen:
- Figur 1: ein Ausführungsbeispiel einer erfindungsgemäßen Fahrzeugheizung;
- Figur 2: die Wärmeübertrager des in Figur 1 dargestellten Ausführungsbeispiels zusammen mit den an ihnen befestigten Heizeinrichtungen und Kontaktschienen;
- Figur 3: ein Detail einer Seitenansicht zu Figur 2;
- Figur 4: eine Explosionsdarstellung einer Heizeinrichtung der dargestellten Fahrzeugheizung;
- Figur 5: die Halterung des in Figur 1 dargestellten Ausführungsbeispiels; und
- Figur 6: die in Figur 5 dargestellte Halterung mit daran befestigten Wärmeübertragern.

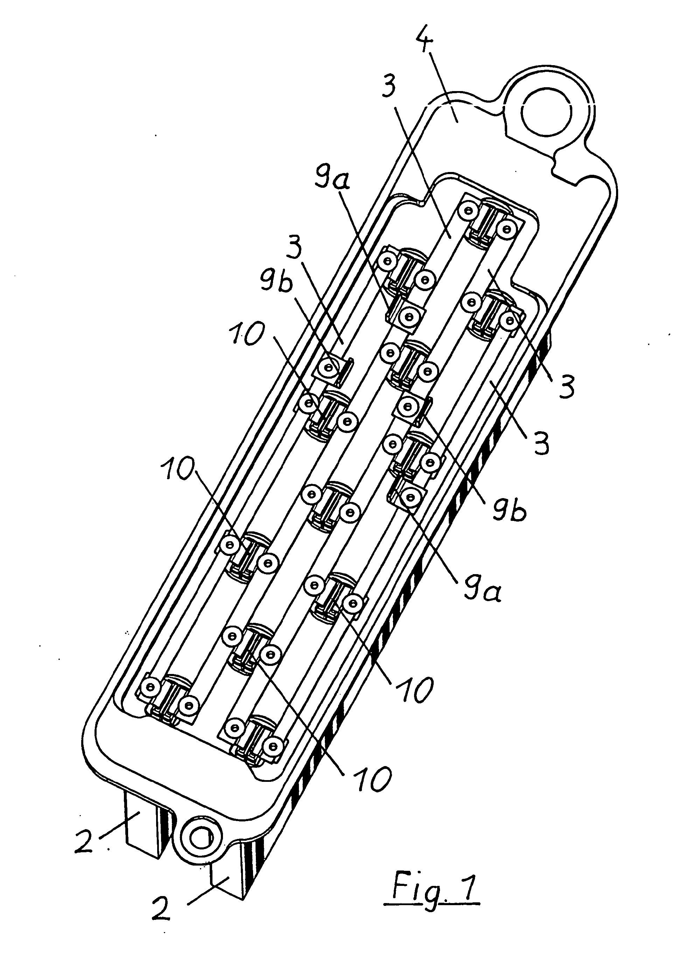

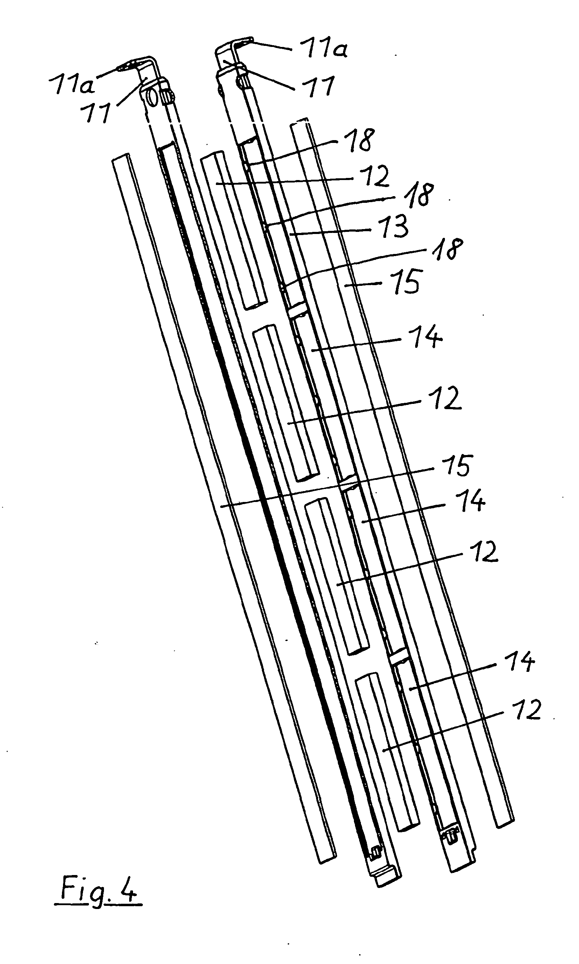

Figur 1 zeigt ein Ausführungsbeispiel einer Fahrzeugheizung 1 mit mehreren von einem zu erwärmenden Luftstrom durchströmbaren Wärmeübertragern 2, die in Strömungsrichtung hintereinander angeordnet sind. Die Wärmeübertrager 2 haben Heizeinrichtungsaufnahmen mit Öffnungen, in denen Heizeinrichtungen 10, deren Aufbau in Figur 4 dargestellt ist, stecken. Die Heizeinrichtungen 10 sind an Kontaktschienen 3 angeschlossen, die sich senkrecht zur Strömungsrichtung erstrecken und bestimmungsgemäß alternierend an die Pole einer Spannungsquelle angeschlossen werden. Die Wärmeübertrager 2 mit den an ihnen befestigten Heizeinrichtungen 10 sind durch eine Halterung 4, die auf ihrer Stirnseite sitzt, zu einer Baugruppe verbunden.

Die Halterung 4 kann beispielsweise aus Kunststoff oder Metall, insbesondere aus Aluminium, sein. Bei dem dargestellten Ausführungsbeispiel ist die Halterung 4 aus Metall und kann deshalb vorteilhaft für eine elektrische Erdung der Wärmeübertrager 2 verwendet werden. Bevorzugt ist die Halterung 4 klemmend mit den Wärmeübertragern 2 verbunden. Alternativ oder zusätzlich ist auch eine formschlüssige Befestigung der Wärmeübertrager 2 an der Halterung 4 möglich, beispielsweise durch Verschraubung oder Verrastung.

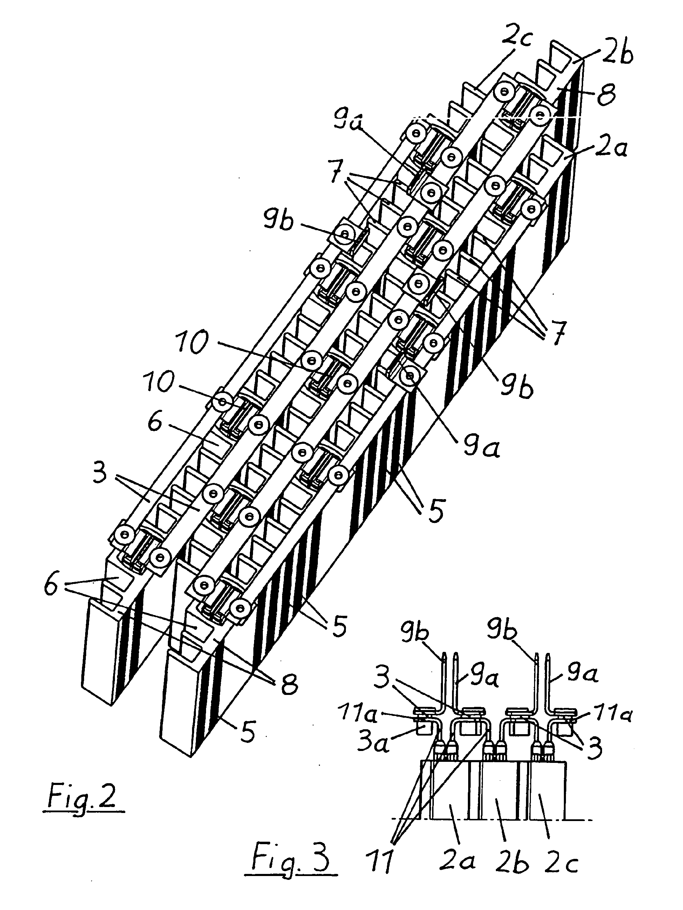

In Figur 2 ist die in Figur 1 gezeigte Fahrzeugheizung ohne die Halterung dargestellt. Man erkennt in Figur 2, dass die Fahrzeugheizung drei identische Wärmeübertrager 2a, 2b, 2c aufweist, die in Strömungsrichtung hintereinander angeordnet sind. Benachbarte Wärmeübertrager 2a, 2b, 2c sind dabei quer zur Strömungsrichtung versetzt angeordnet. Vorteilhaft ergibt sich auf diese Weise, dass die Heizeinrichtungen 10 von benachbarten Wärmeübertragern 2a, 2b, 2c in Bezug auf die Strömungsrichtung versetzt angeordnet sind und sich deshalb eine verbesserte Wärmeabgabe an den Luftstrom ergibt.

Die Wärmeübertrager 2a, 2b, 2c sind bei dem dargestellten Ausführungsbeispiel Strangpressprofile, die Durchbrüche 5 aufweisen, die von einem Luftstrom quer zur Strangpressrichtung durchströmbar sind. Diese Durchbrüche 5 sind bei dem dargestellten Ausführungsbeispiel nur schematisch durch streifenförmige Bereiche des Strangpressprofils dargestellt. In den streifenförmigen Bereichen ist eine Vielzahl von Durchbrüchen 5 angeordnet. Die Durchbrüche 5 können beispielsweise in das Strangpressprofil gestanzt werden und nahezu beliebig geformt sein. Geeignet sind insbesondere kreis- oder schlitzförmige Löcher.

Die Strangpressprofile 2a, 2b, 2c weisen jeweils mehrere, bei dem dargestellten Ausführungsbeispiel vier, Röhren 6 auf, in denen die Heizeinrichtungen 10 stecken. Die Röhren 6 bzw. die Öffnungen dieser rechteckigen Röhren 6 bilden somit Aufnahmen für die Heizeinrichtungen 10.

Die Strangpressprofile 2a, 2b, 2c haben Wärmeabgaberippen 7, die von einer Basisplatte 8 ausgehen, in der sich die von dem erwärmenden Luftstrom durchströmbaren Durchbrüche 5 befinden. Bei dem dargestellten Ausführungsbeispiel gehen jeweils nur von einer Seite dieser Platte 8 Wärmeabgaberippen 7 aus. Es können jedoch auch von beiden Seiten der Platte 8 Wärmeabgaberippen 7 ausgehen.

Figur 3 zeigt ein Detail einer Seitenansicht zu Figur 2 mit Blickrichtung senkrecht zur Strömungsrichtung und senkrecht zur Strangpressrichtung der Wärmeübertrager 2a, 2b, 2c. Die bereits erwähnten Kontaktschienen 3 sind in den Figuren 1 und 2 deutlicher zu erkennen. Abgesehen von der in Strömungsrichtung vordersten und der in Strömungsrichtung hintersten Kontaktschiene 3 sind an jede Kontaktschiene 3 jeweils Heizeinrichtungen 10 von zwei benachbarten Wärmetauschern 2a, 2b, 2c angeschlossen. An den Kontaktschienen 3 sind elektrische Anschlüsse 9a, 9b befestigt. Die Anschlüsse 9a werden bestimmungsgemäß an den Minuspol und die Anschlüsse 9b an den Pluspol einer Spannungsquelle angeschlossen. Auf diese Weise ergibt sich, dass die Heizeinrichtungen 10 benachbarter Wärmetauscher 2a, 2b, 2c jeweils in umgekehrter Richtung von Strom durchflossen werden.

Der Aufbau der Heizeinrichtungen 10 ist in Figur 4 zu sehen. Jede der Heizeinrichtungen 10 hat zwei gleiche Kontaktplatten 11, zwischen denen mehrere quaderförmige Heizelemente 12 aus einer PTC-Keramik (positiver Temperaturcoeffizient) angeordnet sind. Die Kontaktplatten 11 tragen jeweils einen Positionierrahmen 13, der Aufnahmen 14 für die Heizelemente 12 definiert. Der Positionierrahmen 13 ist bevorzugt aus Kunststoff und kann auf die Kontaktplatten 11 aufgeschoben sein. Der Positionierrahmen 13 kann jedoch auch um die Kontaktplatten 11 herum gespritzt werden. Der Positionierrahmen 13 hat Klemmnasen 18, die an die Aufnahmen 14 umgebenden Innenseiten angeordnet sind und eingesetzte Heizelemente klemmend fixieren.

Vorteilhaft können die Kontaktplatten 11, Positionierrahmen 13 und die Heizelemente 12 zu einer Einheit vormontiert werden, die sich gut handhaben lässt.

Wie Figur 4 zeigt, lässt der Positionierrahmen 13 bei dem dargestellten Ausführungsbeispiel eine von den Heizelementen 12 abgewandten Rückseite der Kontaktplatten 11 frei. Die Kontaktplatten 11 tragen auf ihrer von den Heizelementen 12 abgewandten Seite eine elektrisch isolierende Auflage 15, bei dem dargestellten Ausführungsbeispiel einem Streifen aus einem Keramikmaterial, beispielsweise Aluminiumoxid. Vormontierte Heizeinrichtungen 10 können mit Kunststofffolie, beispielsweise Kaptonfolie, umwickelt werden. Wenn ein Isolationsstreifen 15 verwendet wird, kann auf diese Weise eine zusätzliche elektrische Isolierung geschaffen werden. Möglich ist es auch, bei Verwendung einer Folie auf einen Isolationsstreifen zu verzichten. Vorteilhaft können durch eine Folie die Bestandteile der Heizeinrichtung 10 zusammen gehalten werden, so dass sich diese vormontieren und besser handhaben lässt.

Die an die Kontaktschienen 3 angeschlossenen Enden 11a der Kontaktplatten 11 sind abgebogen. Diese Enden 11a können beispielsweise durch Niete 3a oder Schrauben an den Kontaktschienen 3 befestigt werden. In entsprechender Weise sind auch die abgebogenen Enden 11a der Kontaktplatten durch Niete 3a an den Kontaktschienen 3 befestigt.

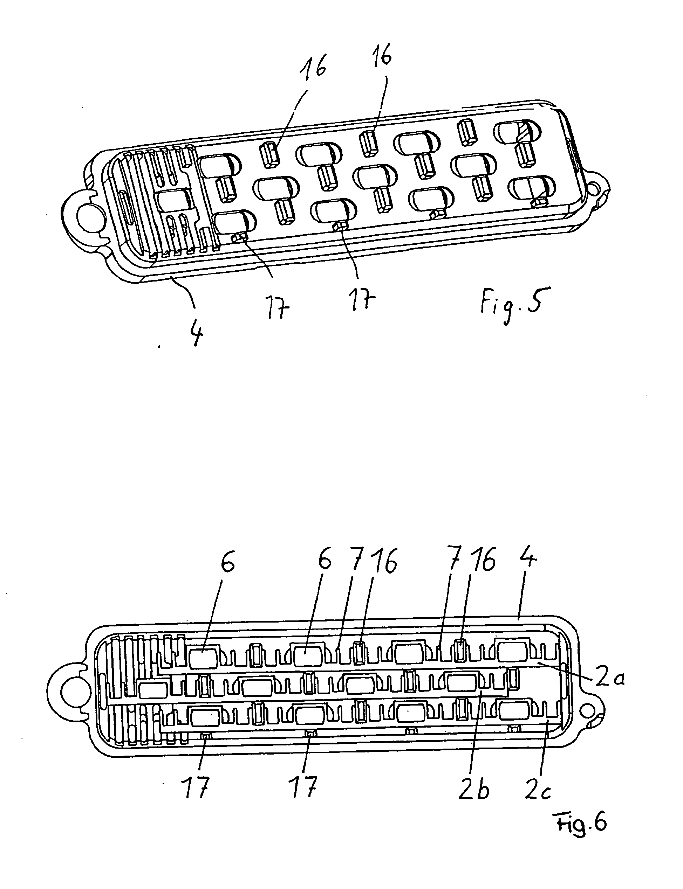

Die Figuren 5 und 6 zeigen die Halterung 4 mit Blick auf die Unterseite, die im montierten Zustand den Wärmeübertragern 2a, 2b, 2c zugewandt ist. In Figur 5 ist die Halterung 4 ohne Wärmeübertrager 2a, 2b, 2c, in Figur 6 mit Wärmeübertrager 2a, 2b, 2c dargestellt. Die Halterung 4 ist klemmend mit den Wärmeübertragern 2a, 2b, 2c verbunden. Dazu hat die Halterung 4 Positionier- und Klemmelemente 16, 17, zwischen denen die Wärmeübertrager 2a, 2b, 2c klemmend gehalten sind. Die Positionier- und Klemmelemente 16, 17 sind dabei in mehreren Reihen an der Unterseite der Halterung 4 angeordnet. Diese Reihen verlaufen quer zur Strömungsrichtung und sind zueinander versetzt angeordnet. Ein Wärmeübertrager 2a, 2b, 2c ist also zwischen zwei Reihen von Positionier- und Klemmelementen 16, 17 eingeklemmt. Einem Element 16, 17 der einen Reihe liegt dabei eine Lücke zischen Elemente 16, 17 der anderen Reihe gegenüber. Die Klemmelemente 16 greifen zwischen den Wärmeabgaberippen 7 ein. Die Klemmelemente 16 sind bei dem dargestellten Ausführungsbeispiel näherungsweise als rechteckige Zapfen oder Rippen ausgebildet, die zwischen benachbarten Wärmeabgaberippen 7 eingeklemmt sind. Gleichzeitig dienen die Klemmelemente 16 als Anschlag für den benachbarten Wärmeübertrager 2a, bzw. 2b. Die Elemente 17 können ebenfalls eine klemmende Funktion haben oder lediglich als Anschläge zur Positionierung der Wärmeübertrager 2a, 2b, 2c dienen.

### Bezugszahlen

- 1: Fahrzeugheizung
- 2a: Wärmeübertrager
- 2b: Wärmeübertrager
- 2c: Wärmeübertrager
- 3: Kontaktschiene
- 3a: Niet
- 4: Halterung
- 5: Durchbrüche
- 6: Röhre
- 7: Wärmeabgaberippe
- 8: Platte
- 9a: Anschlüsse
- 9b: Anschlüsse
- 10: Heizeinrichtung
- 11: Kontaktplatte
- 11 a: abgebogenes Ende der Kontaktplatten
- 12: Heizelemente
- 13: Positionierrahmen
- 14: Aufnahme für Heizelement
- 15: Isolierauflage
- 16, 17: Positionier- und Klemmelemente
- 18: Klemmnasen

## Patentansprüche

1. Fahrzeugheizung mit
mehreren Heizeinrichtungen (10), die jeweils mindestens ein Heizelement (12) aufweisen, das zwischen zwei Kontaktplatten (11) angeordnet ist,
mehreren von einem zu erwärmenden Luftstrom durchströmbaren Wärmeübertragern (2a, 2b, 2c), an denen jeweils mindestens eine der Heizeinrichtungen (10) befestigt ist, und
einer Halterung (4), welche die Wärmeübertrager (2a, 2b, 2c) und die an ihnen befestigten Heizeinrichtungen (10) zu einer Baugruppe verbindet,
wobei die Wärmeübertrager (2a, 2b, 2c) jeweils mindestens eine Heizeinrichtungsaufnahme (6) aufweisen, in der eine der Heizeinrichtungen (10) angeordnet ist, **dadurch gekennzeichnet, dass**
die Wärmeübertrager (2a, 2b, 2c) in Strömungsrichtung hintereinander angeordnet sind,
die Wärmeübertrager (2a, 2b, 2c) jeweils mehrere Heizeinrichtungsaufnahmen aufweisen, wobei sich senkrecht zur Strömungsrichtung nebeneinander mehrere Kontaktschienen (3) erstrecken, wobei die Kontaktplatten (11) der Heizeinrichtungen (10) jeweils an eine von zwei benachbarten Kontaktschienen (3) angeschlossen sind.

2. Fahrzeugheizung nach Anspruch 1, **dadurch gekennzeichnet, dass** die Heizeinrichtungsaufnahme (6) eine Öffnung aufweist, in der die Heizeinrichtung (10) steckt.

3. Fahrzeugheizung nach einem der vorstehenden Ansprüche, **dadurch gekennzeichnet, dass** die Kontaktplatten (11) der Heizeinrichtungen (10) jeweils einen Positionierrahmen (13) tragen, der mindestens eine Aufnahme (14) für ein Heizelement (12) bildet.

4. Fahrzeugheizung nach einem der vorstehenden Ansprüche, **dadurch gekennzeichnet, dass** die Positionierrahmen (13) Klemmnasen (18) zum Klemmen der der Heizelemente (12) tragen.

5. Fahrzeugheizung nach Anspruch 3 oder 4, **dadurch gekennzeichnet, dass** die Kontaktplatten (11) und die an ihnen befestigten Positionierrahmen (13) jeweils gleich ausgebildet sind.

6. Fahrzeugheizung nach einem der vorstehenden Ansprüche, **dadurch gekennzeichnet, dass** die Halterung (4) die Wärmeübertrager (2a, 2b, 2c) klemmend hält.

7. Fahrzeugheizung nach einem der vorstehenden Ansprüche, **dadurch gekennzeichnet, dass** beide Kontaktplatten (11) der Heizeinrichtungen (10) elektrisch von den Wärmeübertragen (2a, 2b, 2c) isoliert sind.

8. Fahrzeugheizung nach einem der vorstehenden Ansprüche, **dadurch gekennzeichnet, dass** die Heizeinrichtungsaufnahmen (6) als Röhren ausgebildet sind, in denen die Heizeinrichtungen (10) stecken.

9. Fahrzeugheizung nach einem der vorstehenden Ansprüche, **dadurch gekennzeichnet, dass** die Wärmeübertrager (2a, 2b, 2c) Wärmeabgaberippen (7) aufweisen.

10. Fahrzeugheizung nach Anspruch 9, **dadurch gekennzeichnet, dass** die Halterung (4) Klemmelemente (16) aufweist, die zwischen die Wärmeabgaberippen (7) eingreifen.

11. Fahrzeugheizung nach einem der vorstehenden Ansprüche, **dadurch gekennzeichnet, dass** an mindestens einer der Kontaktschienen (3) Kontaktplatten (11) sowohl von Heizeinrichtungen (10), die sich in Heizeinrichtungsaufnahmen eines ersten der Wärmeübertrager (2a, 2b, 2c) befinden, als auch von Heizeinrichtungen (10), die sich in Heizeinrichtungsaufnahmen eines zweiten in Strömungsrichtung dahinter angeordneten Wärmeübertragen (2a, 2b, 2c) befinden, angeschlossen sind.

12. Fahrzeugheizung nach einem der vorstehenden Ansprüche, **dadurch gekennzeichnet, dass** benachbarte Wärmeübertrager (2a, 2b, 2c) in Bezug auf die Strömungsrichtung unterschiedlich angeordnet sind.

13. Fahrzeugheizung nach einem der vorstehenden Ansprüche, **dadurch gekennzeichnet, dass** die Heizeinrichtungsaufnahmen (6) in der Halterung (4) eingeklemmt sind.

## Claims

1. A vehicle heating system, comprising
a plurality of heating devices (10) which each comprise at least one heating element (12) arranged between two contact plates (11),
a plurality of heat transfer devices (2a, 2b, 2c) through which air to be heated can flow and to each of which at least one of the heating devices (10) is attached, and
a holder (4) which combines the heat transfer devices (2a, 2b, 2c) and the heating devices (10) attached thereto to form an assembly, wherein
the heat transfer devices (2a, 2b, 2c) each comprise at least one heating device receptacle (6) in which one of the heating devices (10) is arranged, **characterized in that**
the heat transfer devices (2a, 2b, 2c) are arranged in series as seen in flow direction,
the heat transfer devices (2a, 2b, 2c) each comprise a plurality of heating device receptacles, wherein a plurality of contact rails (3) extend in parallel perpendicular to the flow direction, wherein the contact plates (11) of the heating devices (10) are each connected to one of two neighboring contact rails (3).

2. The vehicle heating system according to Claim 1, **characterized in that** the heating device receptacle (6) comprises an opening into which the heating device is stuck.

3. The vehicle heating system according to any one of the preceding claims, **characterized in that** the contact plates (11) of the heating devices (10) each carry a positioning frame (13) which forms at least one receptacle (14) for a heating element (12).

4. The vehicle heating system according to any one of the preceding claims, **characterized in that** the positioning frames (13) carry clamping noses (18) for clamping the heating elements (12).

5. The vehicle heating system according to Claim 3 or 4, **characterized in that** the contact plates (11) and the positioning frames (13) attached thereto are each shaped equally.

6. The vehicle heating system according to any one of the preceding claims, **characterized in that** holder (4) holds the heat transfer devices (2a, 2b, 2c) in a clamping manner.

7. The vehicle heating system according to any one of the preceding claims, **characterized in that** both contact plates (11) of each heating device (10) are electrically isolated from the heat transfer devices (2a, 2b, 2c).

8. The vehicle heating system according to any one of the preceding claims, **characterized in that** the heating device receptacles (6) are formed as tubes into which the heating devices are stuck.

9. The vehicle heating system according to any one of the preceding claims, **characterized in that** the heat transfer devices (2a, 2b, 2c) have heat transfer fins (7).

10. The vehicle heating system according to Claim 9, **characterized in that** the holder (4) comprises clamping elements (16) which engage between the heat transfer fins (7).

11. The vehicle heating system according to any one of the preceding claims, **characterized in that** at least one of the contact rails (3) is connected to contact plates (11) of heating devices (10), which are positioned in heating device receptacles of a first heat transfer device (2a, 2b, 2c), as well as of heating devices (10) which are positioned in a second heat transfer device (2a, 2b, 2c) being arranged downstream of the first.

12. The vehicle heating system according to any one of the preceding claims, **characterized in that** neighboring heat transfer devices (2a, 2b, 2c) are arranged in a different manner with respect to the flow direction.

13. The vehicle heating system according to any one of the preceding claims, **characterized in that** the heating device receptacles (6) are clamped in the holder (4).

## Revendications

1. Chauffage de véhicule comprenant
plusieurs dispositifs de chauffage (10) comportant au moins un élément chauffant (12) disposé entre deux plaques de contact (11),
plusieurs échangeurs de chaleur (2a, 2b, 2c) aptes à être traversés par un courant d'air à réchauffer, à chacun desquels est fixé au moins un des dispositifs de chauffage (10), et
une platine support (4) qui regroupe les échangeurs de chaleur (2a, 2b, 2c) et les dispositifs de chauffage (10) qui y sont fixés en un ensemble,
les échangeurs de chaleur (2a, 2b, 2c) comportant chacun au moins un logement (6) de dispositif de chauffage dans lequel est disposé un des dispositifs de chauffage (10), **caractérisé en ce que**
les échangeurs de chaleur (2a, 2b, 2c) sont disposés les uns derrière les autres dans le sens de l'écoulement,
les échangeurs de chaleur (2a, 2b, 2c) comportent chacun plusieurs logements de dispositif de chauffage, plusieurs rails de contact (3) s'étendant côte à côte perpendiculairement au sens de l'écoulement, les plaques de contact (11) des dispositifs de chauffage (10) étant chacune raccordée à un des deux rails de contact (3) adjacents.

2. Chauffage de véhicule selon la revendication 1, **caractérisé en ce que** le logement (6) de dispositif de chauffage comporte une ouverture dans laquelle est engagé le dispositif de chauffage (10).

3. Chauffage de véhicule selon l'une des revendications précédentes, **caractérisé en ce que** les plaques de contact (11) des dispositifs de chauffage (10) comportent chacune un portique de positionnement (13) formant au moins un logement (14) destiné à recevoir un élément chauffant (12).

4. Chauffage de véhicule selon l'une des revendications précédentes, **caractérisé en ce que** les portiques de positionnement (13) comportent des bords de serrage (18) pour le serrage des éléments chauffage (12).

5. Chauffage de véhicule selon l'une des revendications 3 ou 4, **caractérisé en ce que** les plaques de contact (11) et les portiques de positionnement (13) qui y sont fixés sont de conception identique.

6. Chauffage de véhicule selon l'une des revendications précédentes, **caractérisé en ce que** la platine support (4) maintient les échangeurs de chaleur (2a, 2b, 2c) par serrage.

7. Chauffage de véhicule selon l'une des revendications précédentes, **caractérisé en ce que** les deux plaques de contact (11) des dispositifs de chauffage (10) sont isolées électriquement des échangeurs de chaleur (2a, 2b, 2c).

8. Chauffage de véhicule selon l'une des revendications précédentes, **caractérisé en ce que** les logements (6) de dispositif de chauffage sont réalisés sous la forme de tubes dans lesquels sont engagés les dispositifs de chauffage (10).

9. Chauffage de véhicule selon l'une des revendications précédentes, **caractérisé en ce que** les échangeurs de chaleur (2a, 2b, 2c) comportent des ailettes de transfert de chaleur (7).

10. Chauffage de véhicule selon la revendication 9, **caractérisé en ce que** la platine support (4) comporte des éléments de serrage (16) qui s'engagent entre les ailettes de transfert de chaleur (7).

11. Chauffage de véhicule selon l'une des revendications précédentes, **caractérisé en ce que** des plaques de contact (11) appartenant aussi bien à des dispositifs de chauffage (10) engagés dans des logements de dispositif de chauffage d'un premier échangeur de chaleur (2a, 2b, 2c) qu'à des dispositifs de chauffage (10) engagés dans des logements d'un deuxième échangeur de chaleur (2a, 2b, 2c) disposé en aval dans le sens de l'écoulement sont raccordés à au moins un des rails de contact (3).

12. Chauffage de véhicule selon l'une des revendications précédentes, **caractérisé en ce que** les échangeurs de chaleur (2a, 2b, 2c) adjacents sont disposés différemment par rapport au sens de l'écoulement.

13. Chauffage de véhicule selon l'une des revendications précédentes, **caractérisé en ce que** les logements (6) de dispositif de chauffage sont maintenus par serrage dans la platine support (4).
